**Europäisches Patentamt**

**European Patent Office**

**Office européen des brevets**

(19)

(11) Veröffentlichungsnummer: **0 018 551**
**B1**

(12) **EUROPÄISCHE PATENTSCHRIFT**

(45) Veröffentlichungstag der Patentschrift: **04.07.84**

(51) Int. Cl.³: **B 29 F 1/06**

(21) Anmeldenummer: **80102072.8**

(22) Anmeldetag: **17.04.80**

(54) Einrichtung zur Sollwerteingabe in die Steuerung einer Spritzgiessmaschine.

(30) Priorität: **25.04.79 DE 2916782**

(43) Veröffentlichungstag der Anmeldung:
**12.11.80 Patentblatt 80/23**

(45) Bekanntmachung des Hinweises auf die Patenterteilung:
**04.07.84 Patentblatt 84/27**

(84) Benannte Vertragsstaaten:
**AT CH DE FR LI**

(56) Entgegenhaltungen:
**DE - A - 2 655 095**

**V.D.I. NACHRICHTEN, Band 30, Nr. 26, Juli
1976 DÜSSELDORF (DE) MESSER: "Visuelles
Informationssystem" Seite 9**

(73) Patentinhaber: **SIEMENS AKTIENGESELLSCHAFT
Berlin und München Wittelsbacherplatz 2
D-8000 München 2 (DE)**

(73) Patentinhaber: **MANNESMANN DEMAG
KUNSTSTOFFTECHNIK ZWEIGNIEDERLASSUNG
DER MANNESMANN DEMAG
AKTIENGESELLSCHAFT
Rennweg 37
D-8500 Nürnberg (DE)**

(72) Erfinder: **Pösl, Rudolf, Dipl.-Ing.
Tuchenbacher Strasse 9
D-8500 Nürnberg (DE)**
Erfinder: **Scholle, Hans
Eichenhain 11
D-8501 Schwaig b. Nürnberg (DE)**

(74) Vertreter: **Mehl, Ernst, Dipl.-Ing.
Postfach 22 01 76
D-8000 München 22 (DE)**

## Beschreibung

Die Erfindung bezieht sich auf eine Einrichtung zur Sollwerteingabe in die Steuerung einer Spritzgießmaschine, bei der jeweils verschiedenen Parameterwerten von z.B. Weg und Zeit unterschiedliche Sollwerte von z.B. Druck und Geschwindigkeit zugeordnet sind.

Zur Steuerung der Spritzgießmaschine ist es z.B. erforderlich, den Druck in Abhängigkeit vom Weg oder der Zeit, bzw. die Geschwindigkeit abhängig vom Weg au verändern.

Die Werte, die empirisch gefunden oder berechnet sind, liegen in Form von Tabellen vor. Zur Eingabe dieser Werte in die Speicher der Steuerung benutzt man entweder Potentiometer oder Dekadenschalter (vgl. z.B. DE—B— 16 38 128).

Bei der Vielzahl von einzugebenden Werten bleibt es nicht aus, daß das Bedienungspersonal das Gefühl für den richtigen Zusammenhang der Werte verliert und daß sich hierdurch Fehler einschleichen. Ergeben sich Korrekturnotwendigkeiten, so ist es ebenfalls recht mühsam, die Korrekturen so zu bestimmen, daß sie noch in den Rahmen der übrigen Werte passen, da der anschauliche Zusammenhang fehlt.

Dies gilt auch für Steuerungen mit Mikroprozessoren (vgl. z.B. DE—A—26 55 095), bei denen zur Eingabe digitale Vorwahlschalter benutzt werden.

Die Aufgabe der vorliegenden Erfindung besteht demgemäß darin, bei einer Einrichtung der eingangs genannten Art die Einstellung und Korrektur der Sollwerte auf einfache Weise zu erleichtern und Bedienungsfehler zu verringern. Diese Aufgabe wird erfindungsgemäß dadurch gelöst, daß Parameterwerte und zugehörige Sollwerte als Kurven mit einem Lichtgriffel oder dergleichen auf dem Sichtschirm eines elektronischen Datensichtgerätes mit Speicherfunktion korrigierbar aufzeichenbar und von hier aus auf Befehl in die Steuerung der Spritzgießmaschine übertragbar sind und daß das Datensichtgerät als steckbare, transportable Einheit ausgebildet ist.

Auf diese Weise hat der Bedienungsmann den Zusammenhang der Werte als Ganzes in Form einer Kurve vor sich, kann also aufgrund der Analogdurchstellung sofort überblicken, ob Fehler gemacht wurden und ist dann auch jederzeit in der Lage, die Auswirkung der Korrektur in bezug auf die übrigen Werte zu übersehen.

Da das Datensichtgerät als steckbare transportable Einheit ausgebildet ist und damit eine Vielzahl von Maschinen mit Daten nacheinander versorgt werden kann, fällt insgesamt gesehen—der Aufwand für das Datensichtgerät nicht besonders ins Gewicht, vor allem wenn man noch berücksichtigt, daß sich die Bedientafeln an den Maschinen durch Fortfall von Eingabeelementen vereinfachen lassen.

In diesem Zusammenhang sei erwähnt, daß Datensichtgeräte mit Lichtgriffeleingabe für Informationen an sich bereits bekannt sind (vgl. z.B. VDI-Nachrichten, Band 30, Nr. 26, Juli 1976, Seite 9).

Mit Vorteil ist die Einrichtung ferner noch so ausgebildet, daß nicht nur Daten vom Datensichtgerät in die Steuerung der Spritzgießmaschine übernehmbar sind, sondern daß umgekehrt auch wieder die Daten aus der Spritzgießmaschine in das Datensichtgerät übernehmbar sind. Dies ist z.B. von besonderem Interesse, wenn beurteilt werden soll, ob das im Speicher vorliegende Programm optimal aufgebaut ist.

Ein weiterer vorteilhafter Einsatz des Datensichtgerätes ist darin zu sehen, daß neben den vorstehend genannten Funktionszusammenhängen der einzelnen Werte gegebenenfalls auch die Spritzgießmaschine selbst in symbolischer Darstellung auf dem Sichtschirm dargestellt werden kann und daß in diese Darstellung dann entsprechende Werte an den einzelnen Punkten eingeblendet werden, um den Zusammenhang zwischen Maschine und Steuerungsabläufen besonders deutlich zum machen.

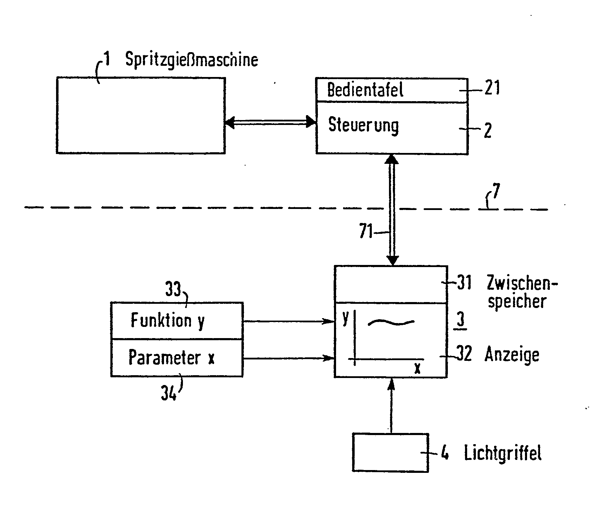

Anhand eines in der Zeichnung dargestellten Ausführungsbeispiels sei die Erfindung näher erläutert: Die schematisch gezeigte Spritzgießmaschine 1 erhält ihre Steuerbefehle von einer elektronischen Steuerung 2, die mit einer Bedientafel 21 ausgerüstet ist. An die Steuerung 2 ist eine Einrichtung zur Sollwertvorgabe ansteckbar, wie durch die gestrichelte Linie 7 angedeutet. Diese Einrichtung besteht aus einem Datensichtgerät 3, von dem schematisch der Sichtschirm 32 und ein Zwischenspeicher 31 gezeigt sind. Mit einem Geber 34 wird der Parameter x, z.B. Weg oder Zeit eingestellt und mit einem Geber 33 die zugehörige Funktion y, z.B. Druck oder Geschwindigkeit. Das Datensichtgerät 3 ist nun so ausgebildet, daß auf dem Sichtschirm in der Abszisse x Wegwerte und auf der Ordinate y Geschwindigkeitswerte aufgezeichnet sind. Wird nun vom Bedienungsmann mittels eines Lichtgriffels 4 eine Kurve auf dem Sichtschirm geschrieben, die den Zusammenhang zwischen Weg und Geschwindigkeit anzeigt, so werden die zusammengehörigen Wertepaare dieser—fortlaufend auf dem Sichtschirm angezeigten—Kurve, automatisch vom Sichtschirm in den Zwischenspeicher 31 übertragen. Der Bedienungsmann trägt die Kurve nach den vorliegenden Tabellenwerten auf und kann dabei jederzeit übersehen, ob der Verlauf der Kurve in etwa einen brauchbaren Funktionszusammenhang ergibt. Es ist ihm ferner sofort möglich, korrigierend einzugreifen, falls Werte nicht brauchbar erscheinen. Ist die Kurve vorgegeben, so kann sie mittels eines Befehls über eine Datenleitung 71 in die Speicher der Steuerung 2 übernommen werden. Zeigt es sich, daß die Spritzgießmaschine 1 nicht optimal arbeitet, so können diese Werte 2 wieder in das Datensichtgerät 3 zurückübertragen und hier in Form einer Kurve angezeigt werden. Der Programmierer hat es dann in der Hand, die Kurve entsprechend den gewünschten Erfordernissen zu verändern.

**Patentansprüche**

1. Einrichtung zur Sollwerteingabe in die Steuerung einer Spritzgießmaschine (1), bei der jeweils verschiedenen Parameterwerten von z.B. Weg und Zeit unterschiedliche Sollwerte von z.B. Druck und Geschwindigkeit zugeordnet sind, dadurch gekennzeichnet, daß Parameterwerte und zugehörige Sollwerte als Kurven mit einem Lichtgriffel (4) oder dergleichen auf dem Sichtschirm (32) eines elektronischen Datensichtgerätes (3) mit Speicherfunktion korrigierbar aufzeichenbar und von hier aus auf Befehl in die Steuerung (2) der Spritzgießmaschine (1) übertragbar sind und daß das Datensichtgerät (3) als steckbare, transportable Einheit ausgebildet ist.

2. Einrichtung nach Anspruch 1, dadurch gekennzeichnet, daß die Werte aus der Steuerung (2) in das Datensichtgerät (3) rückübertragbar und anzeigbar sind.

**Revendications**

1. Dispositif d'introduction de valeurs de consigne dans la commande d'une machine de moulage par injection (1), dans lequel diverses valeurs de paramètre, par exemple de la course et du temps, sont associées à des valeurs de consigne différentes, par exemple de pression et de vitesse, caractérisé en ce que des valeurs de paramètre et des valeurs de consigne correspondantes, sous forme de courbes, peuvent être enregistrées, avec possibilité de correction, à l'aide d'un crayon lumineux (4) ou similaire sur l'écran de visualisation (32) d'un appareil électronique de visualisation de données (3) à fonction de mémoire, et de là peuvent être transférées, sur instruction, à la commande (2) de la machine de moulage par injection (1) et en ce que l'appareil de visualisation de données (3) est agencé en un ensemble enfichable et transportable.

2. Dispositif suivant la revendication 1, caractérisé en ce que les valeurs peuvent être retransférées de la commande (2) à l'appareil de visualisation de données et être affichées.

**Claims**

1. Apparatus for the input of the theoretical value into the control unit of an injection moulding machine (1), in which different parameter values of, for example, displacement and time, are respectively assigned different theoretical values of, for example, pressure and speed, characterised in that parameter values and theoretical values belonging thereto can be recorded as curves on the display screen (32) of an electronic data display device (3) with a storage function so that they can be corrected by means of a light pen (4) or the like, and on command can be transferred therefrom into the control unit (2) of the injection moulding machine (1); and that the data display device (3) is in the form of a transportable plug-in unit.

2. Apparatus as claimed in Claim 1, characterised in that the values can be re-transmitted from the control unit (2) to the data display device (3) and there displayed.